# FASCICULE DE BREVET EUROPEEN

(11) **EP 1 590 561 B1**
(45) Date de publication et mention de la délivrance du brevet: **21.03.2007**
(21) Numéro de dépôt: 04708793.7
(22) Date de dépôt: 06.02.2004
(51) Int. Cl.: F02D 11/10, F02D 41/22, B60K 28/00

(54) **PROCEDE ET DISPOSITIF DE COMMANDE DU GROUPE MOTO-PROPULSEUR D'UN VEHICULE AUTOMOBILE ANIME PAR UN MOTEUR A COMBUSTION INTERNE**
VERFAHREN UND VORRICHTUNG ZUR STEUERUNG DER ANTRIEBSEINHEIT EINES DURCH EINEN VERBRENNUNGSMOTOR ANGETRIEBENEN FAHRZEUGES
CONTROL METHOD AND DEVICE FOR THE PROPULSION MOTOR UNIT OF A MOTOR VEHICLE DRIVEN BY AN INTERNAL COMBUSTION ENGINE

(30) Priorité: 06.02.2003 FR 0301399
(43) Date de publication de la demande: 02.11.2005
(73) Titulaire: Renault s.a.s., 92100 Boulogne Billancourt (FR)
(72) Inventeur: BIEMONT, Anne, F-91470 Limours (FR); FRAWEEL, Olivier, F-91160 Saulx-les-Chartreux (FR); TAFFIN, Christian, F-78320 Le Mesnil Saint Denis (FR)
(86) Numéro de dépôt international: PCT/FR2004/000274
(87) Numéro de publication internationale: WO 2004/072458

(56) Documents cités:
- DE-A- 3 447 628
- US-A- 5 960 771
- US-A- 5 999 875
- US-A- 6 116 214
- US-B1- 6 513 492

## Description

La présente invention est relative à un procédé et à un dispositif de commande du groupe moto-propulseur d'un véhicule automobile animé par un moteur à combustion interne, ledit véhicule comprenant des moyens de commande dudit groupe incluant des moyens de formation d'un signal représentatif de l'enfoncement d'une pédale d'accélérateur actionnée par le conducteur du véhicule, et des moyens de détection d'une dégradation dudit signal.

A l'occurrence d'une telle dégradation, d'origine mécanique, électrique ou électronique par exemple, il convient naturellement que le dispositif de commande du groupe moto-propulseur mette en oeuvre une stratégie de commande conçue pour se passer de l'information normalement portée par le signal représentatif de l'enfoncement de la pédale d'accélérateur, soit le couple demandé par le conducteur au moteur du véhicule. Il s'agit en effet d'assurer la sécurité du véhicule et de ses passagers, ainsi que de permettre au véhicule de rallier au plus vite un atelier de réparation de la panne constatée.

Selon une première stratégie connue (voir par exemple DE 3447628), on fournit alors à un calculateur de gestion du fonctionnement du moteur une information qui se substitue à celle portée par le signal dégradé, information correspondant à une valeur fixe, forfaitaire, de l'enfoncement de la pédale d'accélérateur, en lieu et place de celle, variable, affichée normalement par le conducteur à l'aide de cette pédale.

Cette stratégie a pour inconvénient de ne pas assurer la mobilité du véhicule, par exemple en côte, du fait qu'elle ne prend pas en compte l'importance des efforts résistants alors appliqués au véhicule.

Selon une deuxième stratégie connue, à la détection d'une dégradation de l'information "pédale", le moteur passe dans un mode de fonctionnement en régulation de ralenti, avec une consigne de régime constante.

L'immobilisation du véhicule n'est alors plus à craindre. Cependant la vitesse du véhicule est alors très faible et ne garantit pas la sécurité des passagers dans certaines circonstances. C'est le cas en particulier si la panne affectant l'information "pédale" survient alors que le véhicule est engagé dans une manoeuvre de dépassement, à grande vitesse. La chute brutale de la vitesse du véhicule, consécutive à l'activation de la régulation ralenti, surprend et gène le conducteur dans sa manoeuvre. De surcroît, la consigne de régime de ralenti étant basse (par exemple 1300 t/mn), le conducteur n'est pas incité (par le bruit du moteur) à enclencher un rapport de boîte de vitesses supérieur qui lui permettrait de faire rouler son véhicule plus vite.

Quand le groupe moto-propulseur comprend une transmission automatisée (boîte de vitesses automatique, boîte de vitesses robotisée, transmission à variation continue, etc...) faisant usage de l'information "pédale", la dégradation de cette dernière ne permet pas à cette transmission de choisir un rapport de transmission optimal. La transmission passe alors, elle aussi, dans un mode de fonctionnement dégradé, défavorable à la sécurité et au confort des passagers, qui peut même conduire à l'immobilisation du véhicule.

Le document US 6 513 492 B1, décrit un procédé de commande du groupe moto-propulseur d'un véhicule automobile animé par un moteur à combustion interne, ledit véhicule comprenant des moyens de commande dudit groupe incluant des moyens de formation d'un signal représentatif de l' enfoncement d'une pédale d'accélérateur actionnée par le conducteur dudit véhicule, et des moyens de détection d'une dégradation dudit signal.

La présente invention a donc pour but de fournir un procédé et un dispositif de commande du groupe moto-propulseur d'un véhicule automobile animé par un moteur à combustion interne, qui ne présentent pas les inconvénients exposés ci-dessus.

On atteint ce but de l'invention, ainsi que d'autres qui apparaîtront à la lecture de la description qui va suivre, avec un procédé de commande du type décrit en préambule de la présente description, remarquable en ce que, à la détection d'une dégradation du signal représentatif de l'enfoncement de la pédale d'accélérateur, on régule la vitesse du véhicule quand cette dernière est supérieure à une valeur de seuil et on régule le régime du moteur, quand la vitesse du véhicule est inférieure à ladite valeur de seuil.

Comme on le verra plus loin en détail cette stratégie permet, en cas de perte de l'information pédale, de maintenir la vitesse du véhicule à une valeur compatible avec le maintien de la sécurité de ce véhicule et de ses passagers et, en particulier, de garantir la non-immobilisation du véhicule, quel que soit l'environnement dans lequel progresse ce véhicule.

Suivant d'autres caractéristiques, optionnelles, du procédé selon l'invention:
- à la détection de la dégradation de l'information pédale, on régule la vitesse du véhicule ou le régime du moteur par l'intermédiaire d'une consigne de couple, qui, après conversion en consigne de charge, est substituée au signal dégradé,
- en période de freinage du véhicule, la consigne de couple est abaissée à une valeur minimum prédéterminée, correspondant de préférence à une position "pied levé" de la pédale d'accélérateur.
- lors d'un franchissement par la vitesse du véhicule de ladite valeur de seuil, on passe d'une régulation en régime à une régulation en vitesse, ou vice versa, par une transition progressive, le couple calculé par le régulateur activé étant de préférence initialisé à la dernière valeur de couple calculée par le régulateur désactivé,
- quand le groupe moto-propulseur comprend une transmission automatisée, ladite consigne de charge, est délivrée à ladite transmission automatisée, en même temps qu'aux moyens de commande du moteur.

L'invention fournit aussi un dispositif pour la mise en oeuvre de ce procédé.

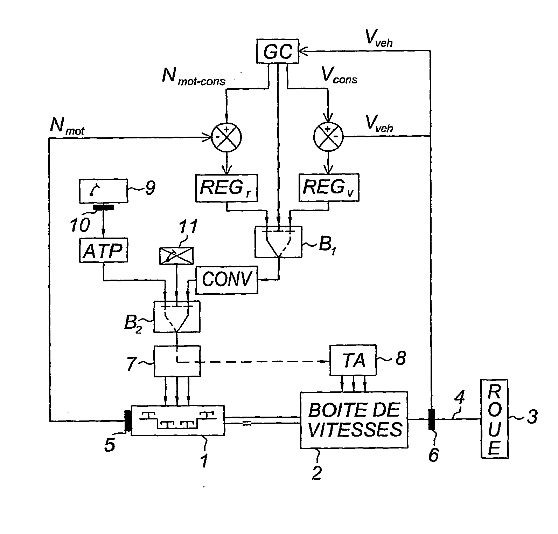

D'autres caractéristiques et avantages de la présente invention apparaîtront à la lecture de la description qui va suivre et à l'examen du dessin annexé où la figure unique représente un schéma fonctionnel de ce dispositif.

Sur cette figure on a représenté schématiquement un moteur à combustion interne 1 et une boîte de vitesses 2 formant partie du groupe moto-propulseur d'un véhicule automobile, dont une (3) des roues est également représentée, montée sur un axe 4, en sortie de la boîte de vitesses 2. Le véhicule est également équipé, classiquement, d'un capteur 5 du régime Nₘₒₜ du moteur 1 et d'un capteur 6 de la vitesse Vᵥₑₕ du véhicule, sensible à la rotation de l'axe 4 de la roue 3.

Des moyens de commande du moteur sont représentés par le bloc 7, ces moyens étant couramment constitués par un calculateur électronique, dûment programmé.

La transmission du véhicule peut être automatisée, comme on l'a vu plus haut. Cela est schématisé par le bloc 8 de commande de la boîte de vitesses 2.

On a également représenté à la figure la pédale d'accélérateur 9 du véhicule automobile, à laquelle est associée un capteur 10 de la position, ou de "l'enfoncement", de cette pédale. Cette information "pédale" est transmise à un bloc ATP d'acquisition et de transformation de cette information, en vue de sa fourniture aux moyens de commande 7 du moteur, pour renseigner ceux-ci sur la demande en couple formulée par le conducteur du véhicule. Des moyens de détection d'une dégradation de l'information "pédale" sont représentés par le bloc 11.

Suivant la présente invention, à la détection d'une telle dégradation, on régule la vitesse Vᵥₑₕ du véhicule quand cette dernière est supérieure à une valeur de seuil Vₛ prédéterminée et on régule Nₘₒₜ du moteur quand la vitesse du véhicule est inférieure à Vₛ.

Pour la mise en oeuvre de ce procédé, le dispositif suivant l'invention comprend, comme représenté à la figure, des moyens GC de génération d'une consigne V_{cons} de vitesse du véhicule et d'une consigne N_{mot-cons} de régime du moteur, un régulateur REGᵣ de régime alimenté par l'écart entre le régime Nₘₒₜ du moteur, délivré par le capteur 5, et le régime de consigne N_{mot-cons}, un régulateur REGᵥ de vitesse alimenté par l'écart entre la vitesse Vᵥₑₕ du véhicule délivrée par le capteur 6 et la vitesse de consigne V_{cons} délivrée par les moyens de génération GC, des moyens B₁ commandés par les moyens GC pour relier fonctionnellement le régulateur de régime REGᵣ ou le régulateur de vitesses REGᵥ, aux moyens de commande 7 du moteur, selon que la vitesse Vᵥₑₕ du véhicule est inférieure ou supérieure à la valeur de seuil Vₛ.

Comme représenté, les moyens B₁ sont constitués par un "basculeur" dont la sortie vers les moyens de commande 7 du moteur est connectée soit au régulateur REGᵣ, sont au régulateur REGᵥ sous la commande des moyens GC. Ces derniers, alimentés par le signal représentatif de la vitesse Vᵥₑₕ du véhicule, comparent cette vitesse à la valeur de seuil Vₛ précitée pour commander, de manière correspondante, le basculeur B₁.

Dans le mode de réalisation du dispositif suivant l'invention représenté à la figure, à titre illustratif et non limitatif seulement, les régulateurs REGᵣ et REGᵥ délivrent une consigne de couple qui alimente un convertisseur CONV de cette consigne en une consigne de charge, ou puissance, demandée au moteur 1.

A la détection par le bloc 11 d'une dégradation de l'information pédale délivrée par le bloc ATP, ce bloc commute l'entrée d'un deuxième basculeur B₂, de la sortie du bloc ATP sur la sortie du convertisseur CONV, de manière que la sortie du basculeur B₂ délivre aux moyens 7 de commande du moteur une consigne de charge propre à assurer la régulation en régime ou en vitesse choisie par les moyens GC de génération de consigne.

Ces consignes peuvent être fonction, par exemple, de la vitesse Vᵥₑₕ courante du véhicule, à l'occurrence de la dégradation de l'information pédale, du rapport de transmission alors engagé dans la boîte de vitesses 2 et de l'état des freins (actifs ou non) du véhicule.

C'est ainsi que la vitesse de consigne V_{cons} peut être fixée à une valeur prédéterminée, en fonction du rapport de transmission : En particulier, la vitesse de consigne V_{cons} peut être différente selon que le véhicule roule en marche avant ou en marche arrière. La vitesse de consigne V_{cons} peut également être modulée en fonction des conditions de roulage, et en particulier en fonction de la vitesse du véhicule.

De préférence, V_{cons} croît avec Vᵥₑₕ. De préférence encore, la "pente" ou le "taux" de croissance de V_{cons} en fonction de Vᵥₑₕ décroît, quand Vᵥₑₕ croît.

Dans ce dernier cas cependant, on plafonne, par sécurité, la vitesse modulée à une valeur maximum fixe (par exemple 75 km/h).

La consigne de régime N_{mot-cons} peut être fonction de la vitesse Vᵥₑₕ du véhicule et du rapport de transmission engagé dans la boîte de vitesses 2. On peut ainsi gérer différemment les décollages du véhicule suivant qu'ils s'opèrent en marche avant ou en marche arrière, ces décollages s'opérant évidemment à faible vitesse, inférieure à la vitesse Vₛ de seuil.

A titre d'exemple illustratif et non limitatif, on peut choisir Vₛ = 15 km/h.

Les régulateurs peuvent être, par exemple, du type PI. Dans ce cas, suivant l'invention, le terme intégral I peut être géré comme suit :
- le terme intégral I est forcé à zéro pendant toute la durée d'au moins une des situations du groupe formé par : véhicule en phase de freinage, débrayage de la boîte de vitesses 2, position neutre de la boîte de vitesse 2, supposée automatisée.
- le terme intégral est figé à la valeur atteinte par ce terme à l'instant d'intervention d'un changement d'état d'une telle boîte automatisée, ou à l'instant du passage du fonctionnement du régulateur hors de limites prédéterminées. En figeant ainsi le terme intégral, on assure la stabilité de la régulation.

Dans le cas d'un véhicule équipé d'une transmission automatisée 8, comme représenté à la figure, la consigne de charge transmise par le basculeur B₂ aux moyens 7 de commande du moteur, est aussi délivrée à ladite transmission, pour gérer les changements de rapport de la boîte 2.

Ainsi, suivant l'invention, on évite un passage du fonctionnement de la transmission automatisée 8 dans son mode dégradé propre, en cas de défaillance de l'information pédale. Le confort et la sécurité de la conduite du véhicule sont avantageusement maintenus, dans cette circonstance.

En cas de freinage en présence d'une dégradation de l'information pédale, le dispositif suivant l'invention transmet au convertisseur CONV une consigne de couple fixée à une valeur minimum pour empêcher que le couple alors délivré par le moteur ne contre le freinage demandé par le conducteur du véhicule. A la fin du freinage, on rétablit progressivement la consigne en vitesse ou en régime par un filtrage adéquat de la consigne appliquée.

Avantageusement l'abaissement de la consigne de couple à sa valeur minimum n'est déclenchée que sur réception d'une information "sécurisée" relative à l'activation des moyens du freinage.

Quand une dégradation de l'information pédale est détectée et que la stratégie de commande du moteur suivant l'invention est alors appliquée, les éventuels systèmes d'aide à la conduite (régulateur ou limiteur de vitesse, ACC, ...) sont évidemment rendus-inactifs. Par contre les systèmes liés à la sécurité "primaire" (antiblocage ou antipatinage des roues, ESP...) sont maintenus, étant compatibles avec la gestion suivant invention d'une dégradation de l'information pédale.

Lors d'une transition du fonctionnement du moteur entre son mode de fonctionnement normal et son mode de fonctionnement suivant l'invention, en présence d'une telle dégradation, la transition est rendue progressive par un filtrage adéquat de la consigne de charge appliquée, de manière à ne pas surprendre le conducteur par une accélération ou une décélération brutale.

On va décrire maintenant, à titre d'exemple illustratif et non limitatif seulement, le fonctionnement d'un véhicule équipé d'une boîte de vitesses manuelle et du dispositif suivant l'invention, après détection d'une dégradation de l'information pédale. Au décollage du véhicule en marche avant, le dispositif transmet une consigne de régime moteur N_{mot-cons}.

Quand la vitesse du véhicule dépasse la valeur de seuil Vₛ, le dispositif supprime la consigne de régime et transmet à la place une consigne de vitesse véhicule V_{cons}, qui peut être fixe, soit V_{cons} = 50 km/h par exemple.

Après une immobilisation du véhicule et un enclenchement de la marche arrière par le conducteur, une consigne de couple en provenance du régulateur de régime est transmise au convertisseur CONV, plus basse que celle appliquée au décollage du véhicule en marche avant. Si, toujours en marche arrière, le véhicule vient à dépasser une certaine vitesse, on repasse sur une consigne de vitesse, qui sera elle aussi plus basse que celle utilisée en marche avant.

On aurait pu penser à utiliser, dans la présente invention, la régulation de régime de ralenti classiquement présente dans tous les véhicules automobiles, quand la dégradation de l'information pédale, combinée à la constatation d'une vitesse du véhicule inférieure à la valeur de seuil Vₛ, commande l'établissement d'une régulation en régime. La consigne de ralenti classiquement utilisée (autour de 1300 tours/mn) est cependant trop basse pour procurer l'amélioration du confort de conduite et de la sécurité du véhicule recherché par la présente invention.

Il apparaît maintenant que l'invention permet bien d'atteindre ces objectifs de la présente invention, grâce à la souplesse du fonctionnement du moteur du véhicule qu'elle procure, en présence d'une dégradation de l'information représentative de l'enfoncement de la pédale d'accélérateur.

C'est ainsi que le régulateur de vitesse du dispositif suivant l'invention autorise un passage des rapports de transmission de la boîte de vitesses, naturel et correct. Le régulateur de régime, qui se substitue au régulateur de vitesse aux très basses vitesses, permet de prendre en compte les efforts résultants appliqués au véhicule (pente de la route, charge du véhicule, climatiseur ou autre consommateur d'énergie activé, etc...) lors d'un décollage du véhicule.

Bien entendu l'invention n'est pas limitée au mode de réalisation décrit et représenté qui n'a été donné qu'à titre d'exemple.

## Revendications

1. Procédé de commande du groupe moto-propulseur d'un véhicule automobile animé par un moteur à combustion interne (1), ledit véhicule comprenant des moyens (7) de commande dudit groupe incluant des moyens de formation (10, ATP) d'un signal représentatif de l'enfoncement d'une pédale d'accélérateur (9) actionnée par le conducteur dudit véhicule, et des moyens de détection (11) d'une dégradation dudit signal,
procédé **caractérisé en ce que**, à la détection d'une telle dégradation, on régule la vitesse (Vᵥₑₕ) du véhicule quand cette dernière est supérieure à une valeur (Vₛ) de seuil et on régule le régime (Nₘₒₜ) du moteur, quand la vitesse du véhicule est inférieure à ladite valeur de seuil (Vₛ).

2. Procédé conforme à la revendication 1, **caractérisé en ce que**, à la détection de ladite dégradation, on régule ladite vitesse (Vᵥₑₕ) ou ledit régime (Nₘₒₜ) par l'intermédiaire d'une consigne de couple, qui, après conversion en consigne de charge, est substituée audit signal dégradé.

3. Procédé conforme à l'une quelconque des revendications 1 et 2, **caractérisé en ce que**, en période de freinage dudit véhicule, ladite consigne de couple est abaissée à une valeur minimum prédéterminée,

4. Procédé conforme à l'une quelconque des revendications 1 à 3, **caractérisé en ce que**, lors d'un franchissement par la vitesse du véhicule de ladite valeur de seuil (Vₛ), on passe d'une régulation en régime à une régulation en vitesse, ou vice versa, par une transition progressive.

5. Procédé conforme à l'une quelconque des revendications 1 à 4, adapté à un groupe moto-propulseur comprenant une transmission automatisée (TA), **caractérisé en ce que** ladite consigne de couple, après conversion en consigne de charge, est délivrée à ladite transmission automatisée (TA) en même temps qu'aux moyens (7) de commande du moteur.

6. Dispositif pour la mise en oeuvre du procédé conforme à l'une quelconque des revendications 1 à 5, comprenant
• des moyens (7) de commande du groupe moto-propulseur d'un véhicule automobile animé par un moteur à combustion interne (1), les moyens (7) de commande incluant des moyens de formation (10, ATP) d'un signal représentatif de l'enfoncement d'une pédale d'accélérateur (9) actionnée par le conducteur dudit véhicule,
• des moyens de détection (11) d'une dégradation dudit signal, et
• des moyens de régulation de la vitesse (V_{véh}) du véhicule ou du régime (Nₘₒₜ) de son moteur, selon que la vitesse (V_{véh}) dudit véhicule est supérieure ou inférieure à ladite valeur (Vₛ) de seuil, ces moyens de régulation, activés par la détection d'une dégradation du signal représentatif de l'enfoncement de ladite pédale d'accélérateur (9), comprenant
o des moyens (GC) de génération de consignes de vitesse (V_{cons}) et de régime (N_{mot-cons}),
o un premier basculeur (B₁),
o un deuxième basculeur (B₂)
o un régulateur (REGᵣ) de régime,
o un régulateur (REGᵥ) de vitesse, et
o un convertisseur (CONV),
lesdits moyens (GC) de génération de consignes de vitesse et de régime étant alimentés par un signal représentatif de la vitesse (V_{véh}) du véhicule et comparant cette vitesse à ladite valeur de seuil (Vₛ) pour commander, de manière correspondante, le premier basculeur (B₁),
le régulateur (REGᵣ) de régime étant alimenté par l'écart entre le régime (Nₘₒₜ) du moteur et le régime de consigne (N_{mot-cons}) fourni par lesdits moyens (GC) de génération de consignes de vitesse et de régime,
le régulateur (REGᵥ) de vitesse étant alimenté par l'écart entre la vitesse (V_{véh}) du véhicule et la vitesse de consigne (V_{cons}) fournie par lesdits moyens (GC) de génération de consignes de vitesse et de régime,
la sortie du basculeur (B₁), connectée au convertisseur (CONV), étant égale à la consigne fournie en entrée par le régulateur de régime (REGᵣ) ou par le régulateur de vitesse (REGᵥ), en fonction de la commande des moyens de génération de consignes de vitesse et de régime (GC),
le convertisseur (CONV) convertissant cette consigne en une consigne de charge, l'entrée du deuxième basculeur (B₂) étant, en cas de détection par les moyens de détection (11) d'une dégradation dudit signal, commutée depuis la sortie des moyens de formation (10, ATP) d'un signal représentatif de l'enfoncement d'une pédale d'accélérateur vers la sortie du convertisseur (CONV), de manière que la sortie du deuxième basculeur (B₂) délivre aux moyens (7) de commande du moteur une consigne de charge propre à assurer la régulation en régime ou en vitesse choisie par les moyens (GC) de génération de consigne.

7. Dispositif conforme à la revendication 6, **caractérisé en ce que** lesdites consignes (V_{cons}) et (N_{mot-cons}) sont fonction de l'une au moins des caractéristiques du groupe formé par : la vitesse (V_{véh}) du véhicule, le rapport de transmission du groupe, l'état actif ou non des freins du véhicule.

8. Dispositif conforme à l'une quelconque des revendications 6 et 7, **caractérisé en ce que** l'un au moins desdits régulateurs (REGᵣ, REGᵥ) est du type PI.

9. Dispositif conforme à la revendication 8, **caractérisé en ce que** le terme intégral (1) dudit régulateur est forcé à zéro pendant toute la durée d'au moins une des situations du groupe formé par : véhicule en phase de freinage, débrayage d'une boîte de vitesses manuelle, transmission automatisée (TA) en position neutre.

10. Dispositif conforme à l'une quelconque des revendications 8 et 9, **caractérisé en ce que** le terme intégral (1) est figé à la valeur atteinte à l'instant d'intervention de l'un au moins des événements suivants : changement d'état d'une transmission automatisée, fonctionnement du régulateur hors de limites prédéterminées.

## Claims

1. Method of control of the propulsion motor unit of a motor vehicle driven by an internal combustion engine (1), the said vehicle comprising means (7) of control of the said unit including means of formation (10, ATP) of a signal representative of the depression of an accelerator pedal (9) actuated by the driver of the said vehicle, and means of detection (11) of a degradation of the said signal,
method **characterized in that**, upon detection of such a degradation, the speed (Vᵥₑₕ) of the vehicle is regulated when it is above a threshold value (Vₛ) and the revs (Nₘₒₜ) of the engine are regulated, when the speed of the vehicle is below the said threshold value (Vₛ).

2. Method in accordance with Claim 1, **characterized in that**, upon the detection of the said degradation, the said speed (Vᵥₑₕ) or the said revs (Nₘₒₜ) is or are regulated by way of a torque setpoint, which, after conversion into a load setpoint, is substituted for the said degraded signal.

3. Method in accordance with any one of Claims 1 and 2, **characterized in that**, in a period of braking of the said vehicle, the said torque setpoint is lowered to a predetermined minimum value.

4. Method in accordance with any one of Claims 1 to 3, **characterized in that**, during a crossing by the speed of the vehicle of the said threshold value (Vₛ), a switch is made from revs-based regulation to speed-based regulation, or vice versa, by a progressive transition.

5. Method in accordance with any one of Claims 1 to 4, adapted to a propulsion motor unit comprising an automated transmission (TA), **characterized in that** the said torque setpoint, after conversion into a load setpoint, is delivered to the said automated transmission (TA) at the same time as to the means (7) of control of the engine.

6. Device for the implementation of the method in accordance with any one of Claims 1 to 5, comprising
• means (7) of control of the propulsion motor unit of a motor vehicle driven by an internal combustion engine (1), the means (7) of control including means of formation (10, ATP) of a signal representative of the depression of an accelerator pedal (9) actuated by the driver of the said vehicle,
• means of detection (11) of a degradation of the said signal, and
• means of regulation of the speed (Vᵥₑₕ) of the vehicle or of the revs (Nₘₒₜ) of its engine, depending on whether the speed (Vᵥₑₕ) of the said vehicle is above or below the said threshold value (Vₛ), these means of regulation, activated by the detection of a degradation of the signal representative of the depression of the said accelerator pedal (9), comprising
° means (GC) of generating a speed setpoint (V_{cons}) and a revs setpoint (N_{mot-cons}),
° a first toggle (B₁),
° a second toggle (B₂)
° a revs regulator (REGᵣ),
° a speed regulator (REGᵥ), and
° a converter (CONV),
the said means (GC) of generating speed and revs setpoints being supplied with a signal representative of the speed (Vᵥₑₕ) of the vehicle and comparing this speed with the said threshold value (Vₛ) so as to control, in a corresponding manner, the first toggle (B₁),
the revs regulator (REGᵣ) being supplied with the deviation between the revs (Nₘₒₜ) of the engine and the setpoint revs (N_{mot-cons}) provided by the said means (GC) of generating speed and revs setpoints,
the speed regulator (REGᵥ) being supplied with the deviation between the speed (Vᵥₑₕ) of the vehicle and the setpoint speed (V_{cons}) provided by the said means (GC) of generating speed and revs setpoints,
the output of the toggle (B₁), connected to the converter (CONV), being equal to the setpoint provided as input by the revs regulator (REGᵣ) or by the speed regulator (REGᵥ) as a function of the control of the means of generating speed and revs setpoints (GC),
the converter (CONV) converting this setpoint into a load setpoint, the input of the second toggle (B₂) being, in case of detection by the means of detection (11) of a degradation of the said signal, switched from the output of the means of formation (10, ATP) of a signal representative of the depression of an accelerator pedal to the output of the converter (CONV), in such a way that the output of the second toggle (B₂) delivers to the means (7) of control of the engine a load setpoint able to ensure the revs-based or speed-based regulation chosen by the setpoint generating means (GC).

7. Device in accordance with Claim 6, **characterized in that** the said setpoints (V_{cons}) and (N_{mot-cons}) are dependent on one at least of the characteristics of the group formed by: the speed (Vᵥₑₕ) of the vehicle, the transmission ratio of the unit, the active or inactive state of the brakes of the vehicle.

8. Device in accordance with any one of Claims 6 and 7, **characterized in that** one at least of the said regulators (REGᵣ, REGᵥ) is of the PI type.

9. Device in accordance with Claim 8, **characterized in that** the integral term (I) of the said regulator is forced to zero throughout the duration of at least one of the situations of the group formed by: vehicle in a braking phase, declutching of a manual gearbox, automated transmission (TA) in the neutral position.

10. Device in accordance with any one of Claims 8 and 9, **characterized in that** the integral term (I) is pegged at the value reached at the instant of occurrence of one at least of the following events: change of state of an automated transmission, operation of the regulator outside of predetermined limits.

## Patentansprüche

1. Verfahren zum Steuern des Antriebsaggregats eines Kraftfahrzeugs, das von einem Verbrennungsmotor (1) angetrieben wird, wobei das Fahrzeug Mittel (7) zum Steuern des Aggregats aufweist, das Mittel (10, ATP) zum Bilden eines Signals, das für das Hineindrücken eines Gaspedals (9), das von dem Fahrer des Fahrzeugs betätigt wird, repräsentativ ist, und Mittel zum Erfassen (11) einer Verschlechterung des Signals aufweist,
**dadurch gekennzeichnet, dass** man beim Erfassen einer solchen Verschlechterung die Geschwindigkeit (V_{véh}) des Fahrzeugs regelt, wenn Letztere größer ist als ein Schwellenwert (Vₛ) und man die Drehzahl (Nₘₒₜ) des Motors regelt, wenn die Geschwindigkeit des Fahrzeugs kleiner ist als der Schwellenwert (Vₛ).

2. Verfahren nach Anspruch 1, **dadurch gekennzeichnet, dass** man beim Erfassen der Verschlechterung die Geschwindigkeit (Vᵥₑₕ) oder die Drehzahl (Nₘₒₜ) über einen Momentsollwert regelt, der nach dem Umwandeln in Lastsollwert für das verschlechterte Signal ersetzt wird.

3. Verfahren nach einem der Ansprüche 1 und 2, **dadurch gekennzeichnet, dass** der Momentsollwert in der Bremsperiode des Fahrzeugs auf einen vorbestimmten Mindestwert gesenkt wird.

4. Verfahren nach einem der Ansprüche 1 bis 3, **dadurch gekennzeichnet, dass** man bei einem Überschreiten des Schwellenwerts (Vₛ) durch die Geschwindigkeit des Fahrzeugs von einer Drehzahlregelung auf eine Geschwindigkeitsregelung oder umgekehrt durch einen allmählichen Übergang übergeht.

5. Verfahren nach einem der Ansprüche 1 bis 4, das an ein Antriebsaggregat angepasst ist, das ein Automatikschaltgetriebe (TA) aufweist, **dadurch gekennzeichnet, dass** der Momentsollwert nach dem Umwandeln in Lastsollwert an das Automatikschaltgetriebe (TA) gleichzeitig wie zu den Mitteln (7) zum Steuern des Motors geliefert wird.

6. Vorrichtung zum Umsetzen des Verfahrens gemäß einem der Ansprüche 1 bis 5, Folgendes aufweisend:
• Mittel (7) zum Steuern des Antriebsaggregats eines Kraftfahrzeugs, das von einem Verbrennungsmotor (1) angetrieben wird, wobei die Mittel (7) zum Steuern Mittel zum Bilden (10, ATP) eines Signals aufweisen, das für das Hineindrücken eines Gaspedals (9), das von dem Fahrer des Fahrzeugs betätigt wird, repräsentativ ist,
• Mittel zum Erfassen (11) einer Verschlechterung des Signals, und
• Mittel zum Regeln der Geschwindigkeit (V_{véh}) des Fahrzeugs oder der Drehzahl (Nₘₒₜ) seines Motors je nachdem, ob die Geschwindigkeit (V_{véh}) des Fahrzeugs größer oder kleiner ist als der Schwellenwert (Vₛ), wobei diese Mittel zum Regeln, die durch das Erfassen einer Verschlechterung des Signals, das für das Hineindrücken des Gaspedals (9) repräsentativ ist, betätigt werden, Folgendes aufweisen:
* Mittel (GC) zum Erzeugen von Geschwindigkeitssollwerten (V_{cons}) und von Drehzahlsollwerten (N_{mot-cons}),
* eine erste Kippschaltung (B₁),
* eine zweite Kippschaltung (B₂),
* einen Drehzahlregler (REGᵣ),
* einen Geschwindigkeitsregler (REGᵥ), und
* einen Wandler (CONV),
wobei die Mittel (GC) zum Erzeugen von Geschwindigkeits- und Drehzahlsollwerten von einem Signal gespeist werden, das für die Geschwindigkeit (V_{véh}) des Fahrzeugs repräsentativ ist, und indem diese Geschwindigkeit mit dem Schwellenwert (Vₛ) verglichen wird, um die erste Kippschaltung (B₁) entsprechend zu steuern,
wobei der Drehzahlregler (REGᵣ) von dem Unterschied zwischen der Drehzahl des Motors (Nₘₒₜ) und der Solldrehzahl (N_{mot-cons}), die von den Mitteln (GC) zum Erzeugen von Geschwindigkeit- und Drehzahlsollwerten geliefert werden, gespeist wird,
wobei der Geschwindigkeitsregler (REGᵥ) von dem Unterschied zwischen der Geschwindigkeit (V_{véh}) des Fahrzeugs und der Sollgeschwindigkeit (V_{cons}), der von den Mitteln (GC) zum Erzeugen der Geschwindigkeits- und Drehzahlsollwerte geliefert wird, gespeist wird,
wobei der Ausgang der Kippschaltung (B₁), der an den Wandler (CONV) angeschlossen ist, gleich dem Sollwert ist, der am Eingang von dem Drehzahlregler (REGᵣ) oder von dem Geschwindigkeitsregler (REGᵥ) in Abhängigkeit von dem Steuern der Mittel zum Erzeugen der Geschwindigkeits- und Drehzahlsollwerte (GC) geliefert wird,
wobei der Wandler (CONV) diesen Sollwert in einen Lastsollwert umwandelt, wobei der Eingang der zweiten Kippschaltung (B₂) beim Erfassen einer Verschlechterung des Signals durch die Erfassungsmittel (11) von dem Ausgang der Mittel zum Bilden (10, ATP) eines Signals, das für das Hineindrücken eines Gaspedals repräsentativ ist, zu dem Ausgang des Wandlers (CONV) so umgeschaltet wird, dass der Ausgang der zweiten Kippschaltung (B₂) zu den Mitteln (7) zum Steuern des Motors einen Lastsollwert liefert, der das Regeln in Drehzahl oder Geschwindigkeit, das durch die Mittel (GC) zum Erzeugen eines Sollwert ausgewählt wird, sicherstellen kann.

7. Vorrichtung nach Anspruch 6, **dadurch gekennzeichnet, dass** die Sollwerte (V_{cons}) und (N_{mot-cons}) von mindestens einem der Gruppe von Merkmalen abhängen, die besteht aus: Geschwindigkeit (V_{véh}) des Fahrzeugs, Übersetzungsverhältnis des Aggregats, aktiver Zustand oder nicht der Bremsen des Fahrzeugs.

8. Vorrichtung nach einem der Ansprüche 6 und 7, **dadurch gekennzeichnet, dass** mindestens einer der Regler (REGᵣ, REGᵥ) vom Typ PI ist.

9. Vorrichtung nach Anspruch 8, **dadurch gekennzeichnet, dass** das integrale Glied (I) des Reglers während der Dauer mindestens einer der Situationen der folgenden Gruppe auf Null forciert wird: Fahrzeug in Bremsphase, Auskuppeln eines manuellen Schaltgetriebes, Automatikschaltgetriebe (TA) in Leerlaufstellung.

10. Vorrichtung nach einem der Ansprüche 8 und 9, **dadurch gekennzeichnet, dass** das integrale Glied (I) auf den Wert fixiert ist, der im Augenblick des Auftretens mindestens eines der folgenden Ereignisse erreicht hat: Wechseln des Zustands eines Automatikschaltgetriebes, Funktionieren des Reglers außerhalb der vorbestimmten Limits.
